(19) Europäisches Patentamt

European Patent Office

Office européen des brevets

(11) Veröffentlichungsnummer: **0 161 335 B1**

(12) **EUROPÄISCHE PATENTSCHRIFT**

(45) Veröffentlichungstag der Patentschrift: **06.05.92**

(51) Int. Cl.⁵: **G06F  3/05**, G06F 12/00, H03H 15/00

(21) Anmeldenummer: **84114787.9**

(22) Anmeldetag: **05.12.84**

(54) **Bereitstellung von Abtastwerten eines zeitabhängigen Signals in einer Datenverarbeitungsanlage.**

(30) Priorität: **16.03.84 DE 3409800**

(43) Veröffentlichungstag der Anmeldung:
**21.11.85 Patentblatt  85/47**

(45) Bekanntmachung des Hinweises auf die Patenterteilung:
**06.05.92 Patentblatt  92/19**

(84) Benannte Vertragsstaaten:
**AT BE DE FR GB IT NL**

(56) Entgegenhaltungen:
**EP-A- 0 054 490**
**WO-A-79/00035**
**US-A- 3 645 505**
**US-A- 3 962 689**

**IBM TECHNICAL DISCLOSURE BULLETIN,**
**Band 18, Nr. 10, März 1976, Seiten 3329-3330;**
**New York, US; D. ESTEBAN: "Shift register**
**implemented by indexing a random-access**
**memory"**

**IBM J. RES. DEVELOP., Band 26, Nr. 4, Juli**
**1982, Seiten 413-423; New York, US; F. MINT-**
**ZER et al.: "A microprocessor for signal pro-**
cessing, the RSP"

(73) Patentinhaber: **SIEMENS AKTIENGESELL-**
**SCHAFT**
**Wittelsbacherplatz 2**
**W-8000 München 2(DE)**

(72) Erfinder: **Rainer, Alois, Dipl.-Ing.**
**Millevistrasse 52/11**
**A-9500 Villach(AT)**
Erfinder: **Ulbrich, Walter, Dr.**
**Renkenstrasse 36**
**W-8031 Puchheim(DE)**
Erfinder: **Gazsi, Lajos, Dr. Ruhr Universität**
**Bochum**
**Lehrstuhl für Nachrichtentechnik Postfach**
**102148**
**W-4630 Bochum(DE)**

**Beschreibung**

Die Erfindung bezieht sich auf ein Verfahren zur Bereitstellung von Abtastwerten eines zeitabhängigen Signals in einer Datenverarbeitungsanlage nach dem Oberbegriff des Patentanspruchs 1 und auf eine Schaltungsanordnung zur Durchführung desselben.

Aus dem IBM Technical Disclosure Bulletin Vol. 18, No. 10, March 1976, Seite 3329 und Seite 3330 ist an sich ein zyklisches Schieberegister, für digitale Filter bekannt, wobei aber die Anzahl der Adressen in einem Adressenzyklus nicht frei wählbar ist. Ferner ist aus der EP-A-0 054 490 eine Möglichkeit zur zyklischen Adressierung eines Pufferspeichers (Ringpuffer) bei einer Einrichtung zum Informationsaustausch von Systemen mit unterschiedlicher Verarbeitungsgeschwindigkeit bekannt.

Der Erfindung liegt die Aufgabe zugrunde, eine Mehrzahl von abgetasteten digitalen Funktionswerten des zu verarbeitenden Signals auf einfache Weise in einem Speicher der Datenverarbeitungsanlage zu speichern und wieder auszulesen, um sie dem Rechenwerk der Anlage zur weiteren Verarbeitung zuzuführen. Diese Aufgabe wird erfindungsgemäß durch eine Ausgestaltung des Verfahrens nach dem kennzeichnenden Teil des Patentanspruchs 1 gelöst.

Der mit der Erfindung erzielbare Vorteil besteht insbesondere darin, daß es mit sehr geringem Schaltungsaufwand gelingt, eine vorgegebene Anzahl von Abtastwerten des zu verarbeitenden Signals zu speichern und den Bestand der gespeicherten Abtastwerte durch jeden neuen Abtastwert in der Weise zu verändern, daß dieser an die Stelle des jeweils ältesten gespeicherten Abtastwertes tritt. Das bedeutet, daß der gespeicherte Bestand an Abtastwerten schrittweise aktualisiert wird, wobei der jeweils aktualisierte Datenbestand in einfacher Weise zur weiteren Verarbeitung im Echtzeitbetrieb ausgelesen werden kann. Die Erfindung kann mit Vorteil verwendet werden, um ein Signal einer Filterfunktion zu unterwerfen, die einem linearphasigen Transversalfilter mit symmetrischen Koeffizienten entspricht.

Der Anspruch 2 ist auf eine Ausgestaltung des Verfahrens nach der Erfindung gerichtet, während die Ansprüche 3 bis 8 vorteilhafte Schaltungsanordnungen zur Durchführung des Verfahrens nach Anspruch 1 betreffen.

Die Erfindung wird nachfolgend anhand der Zeichnung näher erläutert. Dabei zeigt:

Fig. 1    das Prinzipschaltbild einer Datenverarbeitungsanlage, die zur Durchführung eines Verfahrens zur Bereitstellung von Abtastwerten eines zeitabhängigen Signals in einer Datenverarbeitungsanlage dient,

Fig. 2    Diagramme zur Erläuterung des Verfahrens,

Fig. 3    das Prinzipschaltbild eines Transversalfilters mit allgemeinen Koeffizienten zur Erläuterung eines Anwendungsfalles des Verfahrens,

Fig. 4    das Prinzipschaltbild einer Datenverarbeitungsanlage, die zur Durchführung des erfindungsgemäßen Verfahrens geeignet ist,

Fig. 5    Diagramme zur Erläuterung des erfindungsgemäßen Verfahrens,

Fig. 6    das Prinzipschaltbild eines Transversalfilters mit symmetrischen Koeffizienten zur Erläuterung eines Anwendungsfalles des erfindungsgemäßen Verfahrens,

Fig. 7    eine Teilschaltung der Datenverarbeitungsanlagen nach Fig. 4, und

Fig. 8    eine Teilschaltung von Fig. 7.

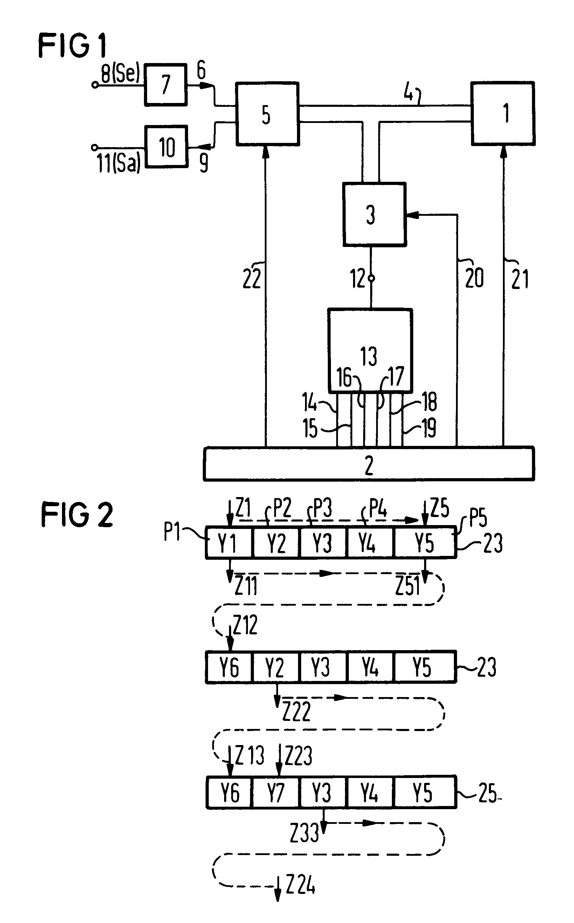

In Fig. 1 ist eine Datenverarbeitungsanlage mit einem Rechenwerk 1, einem Leitwerk 2 und einem Speicher mit wahlfreiem Zugriff (RAM) 3 dargestellt. Das Rechenwerk 1 ist über eine Sammelleitung 4 mit dem Speicher 3 und mit einer Eingabe/Ausgabe-Einheit 5 verbunden, deren Eingang über eine n-adrige Leitung 6 mit einem Analog/Digital-Wandler 7 beschaltet ist. Dessen Eingang 8 ist mit einem zu verarbeitenden zeitabhängigen analogen Signal Se belegt. Ein Ausgang von 5 ist über eine n-adrige Leitung 9 mit einem Digital/Analog-Wandler 10 verbunden, an dessen Ausgang 11 ein analoges Signal Sa abgreifbar ist.

Zwischen dem Leitwerk 2 und dem Adresseneingang 12 des Speichers 3 ist eine adressarithmetische Einheit 13 angeordnet, über die eine zyklische Adressierung eines vorgegebenen Speicherbereichs erfolgt. Das geschieht durch die Abgabe einer Adressenfolge, die einen vorgegebenen Adressenbereich zwischen einer Bereichsuntergrenze und einer Bereichsobergrenze mehrmals zyklisch durchläuft. Hierunter soll z.B. verstanden werden, daß die einzelnen Adressen der Adressenfolge, insbesondere ausgehend von der Bereichsuntergrenze, den Adressenbereich in aufsteigender Richtung in einzelnen Schritten durchlaufen, wobei jeweils nach dem Erreichen der Bereichsobergrenze auf die Bereichsuntergrenze umgeschaltet und anschließend eine weitere, den Adressenbereich schrittweise in aufsteigender Richtung durchlaufende Adressenfolge abgegeben wird. Andererseits kann eine zyklische Adressierung auch so verstanden werden, daß eine Folge von Adressen gebildet wird, die, insbesondere ausgehend von der Bereichsobergrenze, den Adressenbereich schrittweise in absteigender Richtung durchlaufen, wobei jeweils nach dem Erreichen der Bereichsuntergrenze auf die Bereichsobergrenze umgeschaltet und mit einer weiteren, den Adressenbereich in absteigender Richtung durchlaufenden Adressenfolge fortgesetzt wird. Die Bereichsuntergrenze kann durch eine erste n-stellige Binärzahl festgelegt werden, die der adressarithmetischen Einheit 13 über eine n-adrige Leitung 14 aus dem Leitwerk 2 eingegeben wird. Die Bereichsobergrenze wird durch eine zweite n-stellige Binärzahl angegeben, die der Einheit 13 über eine n-adrige Leitung 15 eingegeben wird.

Über eine n-adrige Adresseneingabeleitung 16 wird der adressarithmetischen Einheit 13 eine aus einer dritten Binärzahl bestehende Adresse eingegeben, die durch ein Signal auf einer Steuerleitung 17 an den Ausgang von 13 durchgeschaltet wird. Durch jedes Befehlssignal, das auf einer weiteren Steuerleitung 18 der Einheit 13 zugeführt wird, ergibt sich eine Weiterschaltung der jeweils am Ausgang von 13 anliegenden Adresse auf die nächstfolgende innerhalb einer vorgegebenen zyklischen Adressenfolge. Schließlich bedeutet ein über eine Steuerleitung 19 der Einheit 13 mitgeteiltes Befehlssignal, daß die jeweils am Ausgang von 13 anliegende Adresse nochmals durchgeschaltet wird. Über eine Steuerleitung 20 werden dem Speicher 3 Befehlssignale mitgeteilt, die ihn z.B. veranlassen, entweder eine über die Sammelleitung 4 empfangene Binärzahl in einen jeweils über die Einheit 13 adressierten Speicherplatz einzuschreiben oder eine Binärzahl, die in einem jeweils über die Einheit 13 adressierten Speicherplatz gespeichert ist, auf die Sammelleitung 4 auszulesen. Ein Steuerleitungsbündel 21 dient zur Übermittlung von Befehlen, z.B. Operationsbefehlen, zwischen dem Leitwerk 2 und dem Rechenwerk 1, während ein Steuerleitungsbündel 22 dazu benutzt wird, um in der Eingabe/Ausgabe-Einheit 5 die Leitung 6 in Richtung auf die Sammelleitung 4 oder die Sammelleitung 4 in Richtung auf die Leitung 9 durchzuschalten.

Im Betrieb wird ein bei 8 anliegendes analoges, zeitabhängiges Signal Se wird von dem Analog/Digital-Wandler 7 periodisch abgetastet, wobei eine Folge von digitalisierten Abtastwerten gebildet wird, die jeweils aus n-stelligen Binärzahlen Y1, Y2, Y3 usw. bestehen. Zu Beginn des Verfahrens wird eine vorgegebene Anzahl dieser Abtastwerte über die Eingabe/Ausgabe- Einheit 5, welche über das Steuerleitungsbündel 22 entsprechend angesteuert wird, nacheinander auf die Sammelleitung 4 und von dort zum Speicher 3 übertragen, wo sie in eine entsprechende Anzahl von Speicherplätzen eingeschrieben wird. Letztere werden nacheinander über die adressarithmetische Einheit 13 adressiert. Für fünf Abtastwerte Y1 ... Y5, ie z.B. in den Speicher 3 eingeschrieben werden sollen, benötigt man fünf Speicherplätze P1 ... P5, von denen jeder n-stellig ausgebildet ist, d.h. n Speicherzellen umfaßt.

In Fig. 2 sind die Speicherplätze P1 ... P5 durch einen entsprechend unterteilten Block 23 schematisch dargestellt. Eine Adressierung von P1 ... P5 synchron mit dem Auftreten der einzelnen Abtastwerte Y1 ... Y5 erfolgt durch eine von 13 abgegebene Adressenfolge mit den einzelnen Adressen Z1 ... Z5, die in Fig. 2 durch die Zeiger Z1 ... Z5 veranschaulicht sind. Durch einen gleichzeitigen Befehl "Einschreiben" auf der Leitung 20 wird der Abtastwert Y1 in P1 gespeichert, der Abtastwert Y2 in P2 usw.. Dabei kann die Adressenfolge Z1 bis Z5 z.B. so erzeugt werden, daß Z1 über die Eingabeleitung 16 als Startadresse eingegeben und durch ein erstes Signal auf der Leitung 17 an den Ausgang von 13 durchgeschaltet wird. Es schließen sich vier Signale auf der Leitung 18 an, die jeweils eine Weiterschaltung von Z1 auf die weiteren Adressen Z2 bis Z5 bewirken. Durch Eingabe von Z1 über die Leitung 14 als Bereichsuntergrenze und der Adresse Z5 über 15 als Bereichsobergrenze wurde vorher festgelegt, daß der Adressenbereich Z1 bis Z5 mittels über die Leitung 18 zugeführter Befehle schrittweise zyklisch durchlaufen werden soll. Mit der Speicherung von Y1 ... Y5 ist eine erste Phase des Verfahrens abgeschlossen.

In einer nachfolgenden zweiten Phase wird der Adressenbereich Z1 bis Z5 mehrfach zyklisch durchlaufen, und zwar jeweils in aufsteigender Richtung. Für jeden dieser Durchläufe werden der adressarithmetischen Einheit 13 fünf Befehlssignale über die Befehlsleitung 18 zugeführt. Dabei bewirken die ersten fünf Befehle, daß, ausgehend von der zuletzt ausgegebenen Adresse Z5, eine Adressenfolge Z11 bis Z51 gebildet wird. Während des Auftretens dieser Adressenfolge wird dem Speicher 3 über die Leitungen 20 der Befehl "Auslesen" mitgeteilt, so daß die in P1 bis P5 gespeicherten Abtastwerte Y1 bis Y5 auf die Sammelleitung 4 ausgelesen und dem Rechenwerk 1 zugeführt werden, in dem sie in herkömmlicher Weise verarbeitet werden. Durch das nächstfolgende Befehlssignal auf der Leitung 18 wird von 13 die Adresse Z12 abgegeben, die der Bereichsuntergrenze entspricht. Damit beginnt der zweite Adressendurchlauf. Die Leitungen 20 sind während der Ausgabe dieser Adressen mit dem Befehl "Einschreiben" belegt, so daß der unter der Adresse Z1 gespeicherte Abtastwert Y1, der den ältesten der in der ersten Phase gespeicherten Abtastwerte darstellt, durch einen neuen Abtastwert Y6 ersetzt bzw. überschrieben wird. Beim Auftreten der übrigen Adressen Z22 bis Z52 innerhalb des zweiten Durchlaufes wird auf die Leitungen 20 der Befehl "Auslesen" gegeben.

Während des dritten Durchlaufes, d.h. während der Abgabe der Adressen Z13 ... Z53 wird der Befehl "Einschreiben" auf der Leitungen 20 wieder nur während des Auftretens einer einzigen Adresse, und zwar der Adresse Z23, dem Speicher 3 mitgeteilt, während allen übrigen Adressen dieses Durchlaufs der Befehl "Auslesen" zugeordnet ist. Damit wird der in P2 gespeicherte Abtastwert Y2, der den ältesten aus der Phase 1 noch verbliebenen Abtastwert darstellt, durch einen neuen Abtastwert Y7 ersetzt. Die übrigen Speicherplätze, d.h. P1 und P3 bis P5, werden dagegen ausgelesen und die in ihnen gespeicherten Abtastwerte dem Rechenwerk 1 zugeführt.

Bei jedem der folgenden Adressendurchläufe wird ebenfalls beim Erreichen eines einzigen Speicherplatzes ein neuer Abtastwert eingeschrieben, während die übrigen Speicherplätze ausgelesen werden. Betrachtet man die Adressen, die in den einzelnen Durchläufen jeweils einem Einschreibebefehl zugeordnet sind, so ergibt sich eine Folge Z12, Z23, Z34, Z45 und Z56, wobei die zugehörigen Speicherplätze in jedem Durchlauf um eine Stelle weiter gegenüber dem der Bereichsuntergrenze Z1 zugeordneten Speicherplatz P1 versetzt sind.

Den ersten Durchlauf der zweiten Phase kann man als eine erste Ausleseperiode auffassen, in der die Abtastwerte Y1 bis Y5 ausgelesen und dem Rechenwerk 1 zugeführt werden. In einer mit Z22 beginnenden zweiten Ausleseperiode werden dann die Werte Y2 ... Y6 ausgelesen, in der mit Z23 beginnenden dritten Ausleseperiode die Werte Y3 ... Y7 usw., so daß jeweils ein von Ausleseperiode zu Ausleseperiode aktualisierter Bestand von Abtastwerten der weiteren Verarbeitung zugrunde gelegt wird. Die Ausgabe der Adressen Z1, Z2 .. Z5, Z12, Z23, Z34, Z45 und Z56 erfolgt daher in gleichen zeitlichen Abständen.

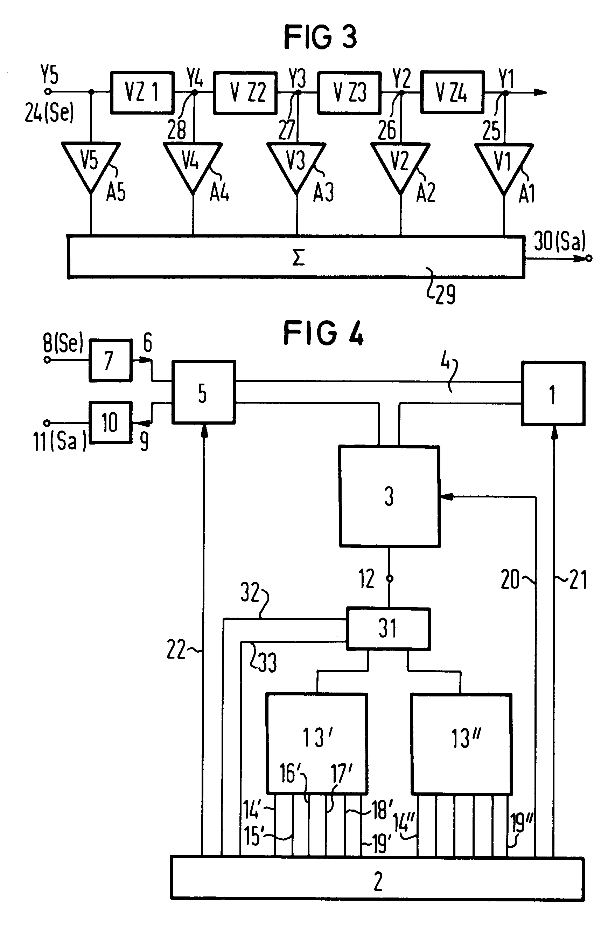

Das vorstehend erläuterte Verfahren kann mit Vorteil dazu verwendet werden, um ein Signal Se einer Filterfunktion zu unterwerfen, die einem Transversalfilter mit allgemeinen Koeffizienten nach Fig. 3 entspricht. Bezeichnet man die einzelnen Stufen einer Verzögerungsleitung mit VZ1 bis VZ4, so stehen die am Filtereingang 24 nacheinander ankommenden, analogen Abtastwerte Y1 ... Y5 usw. eines eingangsseitigen Signals Se nach der vierten Abtastperiode jeweils an den Stufenausgängen 25 bis 28 sowie am Eingang 24 zur Verfügung. An den zuletzt genannten Schaltungspunkten sind Verstärker V1 bis V5 angeschlossen, die Verstärkungsfaktoren A1 bis A5 aufweisen. Die Ausgänge der Verstärker liegen an den Eingängen einer Summierungsschaltung 29, an deren Ausgang 30 das Ausgangssignal Sa des Transversalfilters abgegriffen werden kann. Die Verstärkungsfaktoren A1 bis A5 stellen die sogenannten Filterkoeffizienten oder Bewertungsfaktoren dar. Das Signal Sa ergibt sich in der Weise, daß in einem ersten Zeitpunkt die Produkte A1 . Y1, A2 . Y2 ... A5 . Y5 zu einem ersten Funktionswert von Sa summiert werden, in einem zweiten Zeitpunkt, der um die Verzögerungszeit einer der Stufen VZi gegenüber diesem ersten Zeitpunkt versetzt ist, die Produkte A1 . Y2, A2 . Y3 ... A5 . Y6 zu einem zweiten Funktionswert von Sa, usw. Dabei werden im Takte der Abtastung von Se jeweils Blöcke von fünf Abtastwerten, d.h. Y1 ... Y5, Y2 ... Y6, Y3 ... Y7 usw. mit denselben Filterkoeffizienten A1 ... A5 multipliziert und die entsprechenden Produkte zueinander summiert.

Die Funktionswerte der gefilterten Ausgangsfunktion Sa von Fig. 3 werden aber auch mit der Datenverarbeitungsanlage nach Fig. 1 erhalten, wenn die dem Rechenwerk 1 blockweise zugeführten Abtastwerte, und zwar Y1 ... Y5, Y2 ... Y6, Y3 ... Y7 usw. jeweils mit den in einem Register des Rechenwerks gespeicherten Filterkoeffizienten A1 ... A5 multipliziert und die entstehenden Produkte zueinander summiert werden. Die jeweiligen in 1 errechneten Funktionswerte werden dann über die Sammelleitung 4 und die entsprechend durchgeschaltete Eingabe/Ausgabe-Einheit 5 auf die Leitung 9 ausgegeben und im Digital/Analog- Wandler 10 in analoge Größen umgeformt, die dann am Ausgang 11 zur Verfügung stehen. Die Gesamtheit der an 11 auftretenden analogen Größen bildet insbesondere nach einer Filterung in einem dem Ausgang 11 nachgeschalteten Tiefpaß ein analoges Ausgangssignal Sa.

Fig. 4 zeigt eine Schaltungsanordnung, die zum Unterschied von Fig. 1 statt einer adressarithmetischen Einheit 13 zwei solche Einheiten 13' und 13" aufweist. Die Ausgänge derselben sind an die Eingänge einer Multiplexschaltung 31 geführt, die ausgangsseitig mit dem Adresseneingang 12 des Speichers 3 beschaltet ist. Zwei Steuerleitungen 32 und 33 dienen dazu, jeweils den Ausgang von 13' oder 13" an den Adresseneingang 12 durchzuschalten. Die untereinander gleichartig aufgebauten Einheiten 13' und 13" entsprechen der Einheit 13 von Fig. 1. Dabei entsprechen die Leitungen 14' bis 19' zwischen dem Leitwerk 2 und der Einheit 13' sowie die Leitungen 14" bis 19" zwischen dem Leitwerk 2 und der Einheit 13" den Leitungen 14 bis 19 von Fig. 1. Die weiteren Schaltungseinheiten von Fig. 4 entsprechen den gleichbezeichneten Einheiten von Fig. 1 nach Aufbau und Wirkungsweise. Über die Leitungsbündel 14' und 15' wird der adressarithmetischen Einheit 13' ein erster Adressenbereich eingegeben, der bei Zuführung von Befehlssignalen über die Leitung 18' in einer vorgegebenen Richtung schrittweise zyklisch durchlaufen wird. Andererseits wird über die Leitungsbündel 14' und 15" der Einheit 13" ein zweiter Adressenbereich eingegeben, der vom ersten Adressenbereich völlig unabhängig ist und bei Zuführung von Befehlssignalen über die Leitung 18'' ebenfalls in einer vorgegebenen Richtung schrittweise zyklisch durchlaufen wird.

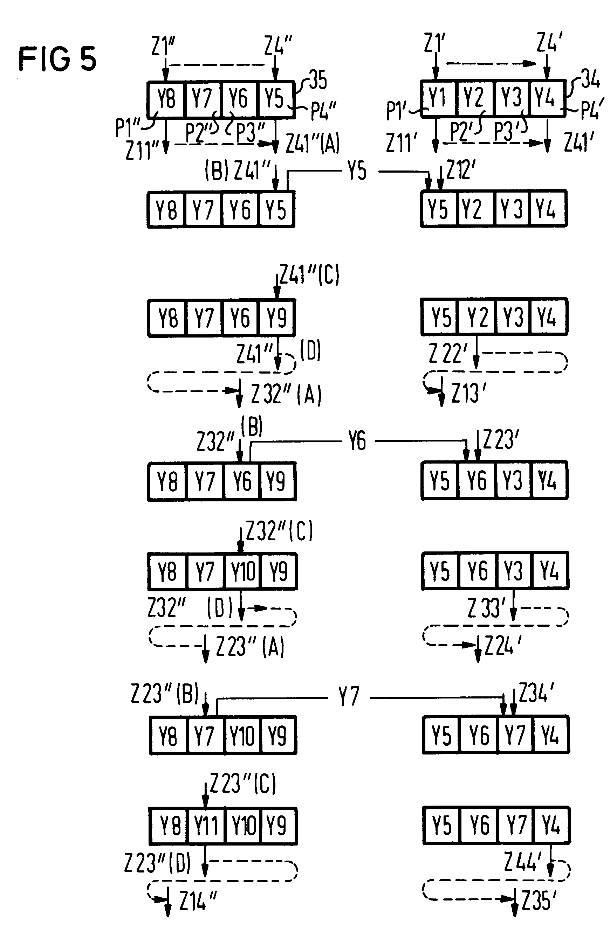

Geht man davon aus, daß das analoge, zeitabhängige Signal Se von dem Analog/Digital-Wandler 7 periodisch abgetastet wird, wobei die digitalisierten Abtastwerte Y1, Y2, Y3 usw. entstehen, so wird nach einem erfindungsgemäßen Verfahren eine vorgegebene Anzahl dieser Abtastwerte, z.B. Y1 ... Y4, in einer entsprechenden Anzahl von Speicherplätzen, zB. P1' ... P4', des ersten Speicherbereichs gespeichert. Die Speicherplätze P1' bis P4' sind in Fig. 5 durch Unterteilungen eines Blocks 34 angedeutet, der den ersten Speicherbereich darstellt. Eine Adressierung von P1' ... P4' synchron mit dem Auftreten von Y1 ... Y4 erfolgt durch eine von der Einheit 13' abgegebene Adressenfolge mit den einzelnen Adressen Z1' ... Z4', die in Fig. 5 durch die Zeiger Z1' ... Z4' veranschaulicht ist. Durch den gleichzeitigen Befehl "Einschreiben" auf der Leitung 20 wird Y1 in P1' gespeichert, Y2 in P2' usw.. Die Adressenfolge Z1' .. Z4' kann in der Einheit 13' analog zu der Adressenfolge Z1 ... Z5 in der Einheit 13 erzeugt werden. Zusätzlich muß jedoch der Ausgang von 13' in der Multiplexschaltung 31 auf den Speicher 3 durchgeschaltet werden, was durch ein Steuersignal auf der Leitung 32 geschieht. Anschließend hieran wird aus den folgenden Abtastwerten von Se eine entsprechende Anzahl, z.B. Y5 ... Y8, in Speicherplätzen, z.B. P1'' ... P4'', des zweiten Speicherbereichs gespeichert. Die Speicherplätze P1'' ... P4'' sind in Fig. 5 durch Unterteilung eines Blocks 35 angedeutet, der den zweiten Speicherbereich darstellt. Die Adressierung von P1'' ... P4'', die synchron mit dem Auftreten von Y5 ... Y8 vorgenommen wird, erfolgt durch eine von 13'' abgegebene Adressenfolge mit den einzelnen Adressen Z4'', Z3''. Z2'' und Z1'', die in Fig. 5 durch entsprechend gezeichnete Zeiger veranschaulicht werden. Durch den gleichzeitigen Befehl "Einschreiben" auf den Leitungen 20 wird Y5 in P4'' gespeichert, Y6 in P3'', Y7 in P2'' und Y8 in P1''. Die Adressenfolge Z4'' ... Z1'' kann dabei so erzeugt werden, daß zunächst Z4'' über die Adresseneingabeleitung 16'' eingegeben und durch ein Befehlssignal auf der Leitung 17'' an den Ausgang von 13'' durchgeschaltet wird und dieser Vorgang für Z3'', Z2'' und Z1'' jeweils wiederholt wird. Dabei muß jedoch der Ausgang von 13'' in der Multiplexschaltung 31 auf den Speicher 3 durchgeschaltet sein, was durch ein Steuersignal auf der Leitung 33 geschieht. Mit der Einspeicherung der Abtastwerte Y1 ... Y4 in den ersten Speicherbereich 34 und der Abtastwerte Y5 ... Y8 in den zweiten Speicherbereich 35 ist eine erste Phase dieses Verfahrens nach der Erfindung abgeschlossen.

In einer nachfolgenden zweiten Phase wird die adressarithmetische Einheit 13' so betrieben, daß der zum Speicherbereich 34 gehörige Adressenbereich Z1'bis Z4' mehrfach zyklisch durchlaufen wird, und zwar jeweils in aufsteigender Richtung. Die zyklische Adressierung von P1' ... P4', die in Figur 5 durch die Zeiger Z11' bis Z35' angedeutet wird, entspricht dabei der bereits anhand von Fig. 2 beschriebenen Adressierung der Speicherplätze P1 ... P5, wie ein Vergleich des rechten Teiles der Fig. 5 mit Fig. 2 zeigt. Lediglich die den Adressen Z12', Z23', Z34' usw. zugeordneten Befehlssignale auf den Leitungen 20 weichen gegenüber dem anhand von Fig. 2 erläuterten Verfahren insofern ab, als die obengenannten "Einschreibe"-Befehle nunmehr durch Befehle zum "Umspeichern" von einzelnen im Speicherbereich 35 gespeicherten Abtastwerten in die jeweils adressierten Speicherplätze des Speicherbereichs 34 ersetzt werden. So ist beispielsweise der Adresse Z12' der Befehl zum Umspeichern von Y5 aus dem Speicherplatz P4'' in den durch Z12' adressierten Speicherplatz P1' zugeordnet, der Adresse Z23' der Befehl zum Umspeichern von Y6 aus P3'' in P2', der Adresse Z34' der Befehl zum Umspeichern von Y7 aus P2'' in P3' usw. Den übrigen Adressen, die von der Einheit 13' während der zweiten Phase abgegeben werden, ist auf den Leitungen 20 jeweils der Befehl "Auslesen" zugeordnet.

Die adressarithmetische Einheit 13'' gibt in der zweiten Phase des betrachteten Verfahrens eine Folge von Adressen ab, durch die der zum Speicherbereich 35 gehörige Adressenbereich mehrfach zyklisch durchlaufen wird, und zwar ebenfalls in aufsteigender Richtung. Im ersten Durchlauf werden dabei die Adressen Z11'' ... Z41'' ausgegeben. Beim Erreichen der Adressenbereichsobergrenze, die durch Z41'' bestimmt ist, werden dem Speicher 3 über die Leitungen 20 nacheinander vier Befehlssignale A bis D zugeführt, die folgende Bedeutungen haben:

A: "Auslesen des im adressierten Speicherplatz P4'' gespeicherten Abtastwertes (Y5) auf die Sammelleitung 4'',

B: "Umspeichern des in dem adressierten Speicherplatz gespeicherten Abtastwertes (Y5) auf den von der Einheit 13' mit der nächstfolgenden Adresse aufgesuchten Speicherplatz (P1')",

C: "Einschreiben des jeweils nächstfolgenden über die Teile 7, 6 und 5 gelieferten Abtastwertes (Y9) von Se" und

D: "Auslesen des neu eingeschriebenen Abtastwertes (Y9) auf die Sammelleitung 4''.

Dabei stellt der Befehl B einen der bereits in Verbindung mit der adressarithmetischen Einheit 13' genannten Umspeicherbefehle dar und fällt zeitlich mit der Ausgabe von Z12' durch die Einheit 13' zusammen. Der Befehl C schließt sich dem Befehl B an, ohne daß vorher eine Weiterschaltung der Adressen in den Einheiten 13' oder 13'' erfolgt ist, während der Befehl D zu einem Zeitpunkt ergeht, zu dem die Einheit 13' bereits auf die nächste Adresse (Z22') weitergeschaltet hat.

Während also von der Einheit 13' nacheinander die Adressen Z41', Z12' und Z22' ausgegeben werden, gibt die Einheit 13'' lediglich die Adresse Z41'' aus. Sollen die Einheiten 13' und 13'' so betrieben werden, daß sie ihre Adressen jeweils im gleichen Takt abgeben, so kann beim Auftreten von Z12' am Ausgang von 13' die Einheit 13'' über die Befehlsleitung 19'' so gesteuert werden, daß sie die bereits am Ausgang anliegende Adresse Z41'' nochmals ausgibt. Ebenso kann 13'' beim Auftreten von Z22' über die Leitung 19'' zur nochmaligen Abgabe der Adresse Z41'' veranlaßt werden.

Innerhalb des zweiten Adressendurchlaufs der zweiten Phase werden die vorstehend beschriebenen vier BefehlssignalseA bis D wieder einem einzigen Speicherplatz zugeordnet, und zwar P3'' bzw. der Adresse Z32''. P3'' ist dabei um einen Speicherplatz gegenüber dem zur Adressenbereichsobergrenze gehörigen Speicherplatz P4'' versetzt. Analog hierzu ergehen die Befehlssignale A bis D im Verlauf des dritten Adressendurchlaufes beim Erreichen des Speicherplatzes P2'' bzw. der Adresse Z23'', was einen Versatz von zwei Speicherplätzen gegenüber P4'' bedeutet. In jedem weiteren Durchlauf ist dann derjenige Speicherplatz, der jeweils den Befehlen A bis D zugeordnet ist, gegenüber P4'' um eine Stelle weiter versetzt. Beim Auftreten der Befehle B und D wird die Einheit 13'' über die Befehlsleitung 19 jeweils veranlaßt, die bereits an ihrem Ausgang anliegende Adresse nochmals durchzuschalten. Die vier Befehlssignale A bis D sind also den Adressen Z41'', Z32'', Z23'' usw. zugeordnet. Allen übrigen von der adressarithmetischen Einheit 13'' während der zweiten Phase abgegebenen Adressen ist jeweils der Befehl "Auslesen des jeweils gespeicherten Abtastwertes auf die Sammelleitung 4" auf den Leitungen 20 zugeordnet.

Bei dem anhand von Fig. 5 erläuterten Verfahren nach der Erfindung werden die Adressen Z1' ... Z4', Z4'' ... Z1'', Z41'', Z32'', Z23'' usw. so abgegeben, daß sie mit dem Auftreten der Abtastwerte Y1, Y2, usw. am Ausgang von 7 synchron liegen.

Geht man davon aus, daß die Speicherplätze P1', P2', usw. des Speicherbereiches 34 und die Speicherplätze P1'', P2'' usw. des Speicherbereichs 35 in der zweiten Phase des Verfahrens, beginnend mit P1' und P1'' jeweils im gleichen Takt ausgelesen werden, und wird die Multiplexschaltung 31 durch jeweils gegeneinander versetzte Signale auf den Leitungen 32 und 33 mit der doppelten Taktfrequenz umgeschaltet, so werden in einer ersten Ausleseperiode die Abtastwerte Y1, Y8, Y2, Y7, Y3, Y6, Y4 und Y5 nacheinander auf die Sammelleitung 4 ausgelesen und dem Rechenwerk 1 zugeführt. In der nächstfolgenden Ausleseperiode sind es dann die Abtastwerte Y2, Y9, Y3, Y8, Y4, Y7, Y5 und Y6. In einer dritten Ausleseperiode werden Y3, Y10, Y4, Y9, Y5, Y8, Y6 und Y7 ausgelesen usw.. Dabei unterscheiden sich die in den einzelnen Ausleseperioden ausgelesenen Blöke von Abtastwerten dadurch voneinander, daß sie gegenüber dem jeweils vorhergehenden Block durch Wegfall des ältesten in diesem noch vorhanden Abtastwert und Hinzufügung eines neuen Abtastwertes jeweils aktualisiert sind.

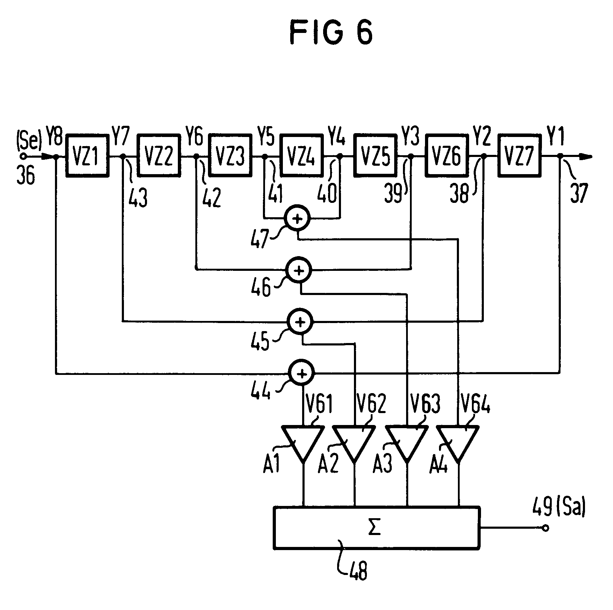

Das anhand von Fig. 5 erläuterte Verfahren nach der Erfindung kann mit Vorteil verwendet werden, um ein Signal Se einer Filterfunktion zu unterwerfen, die einem linearphasigen Transversalfilter mit symmetrischen Koeffizienten nach Fig. 6 entspricht. Hierbei wird von einer Verzögerungsleitung ausgegangen, die aus den Stufen VZ1 bis VZ7 besteht. Das in einzelne analoge Abtastwerte Y1, Y2 usw. zerlegte Signal Se steht am Filtereingang 36 zur Verfügung. Nach der siebenten Abtastperiode sind die Abtastwerte aus Y1 bis Y8 gemäß Fig. 6 an den Ausgängen 37 bis 43 und dem Filtereingang 36 abgreifbar. Infolge der symmetrischen Filterkoeffizienten sind sowohl der am Ausgang 37 auftretende Abtastwert als auch der am Eingang 36 auftretende Abtastwert mit demselben Filterkoeffizienten A1 zu multiplizieren, die bei 38 und 43 auftretenden Abtastwerte mit A2, die bei 39 und 42 auftretenden Abtastwerte mit A3 und die bei 40 und 41 abgreifbaren Abtastwerte mit A4. Da die so gebildeten Produkte zueinander zu addieren sind, ist es statthaft, zwei jeweils mit demselben Filterkoeffizienten zu multiplizierende Abtastwerte zunächst zu addieren, und die so entstandenen Zwischensummen jeweils mit diesem Filterkoeffizienten zu multiplizieren, was in den Verstärkern V61 bis V64 geschieht, die Verstärkungsgrade A1 bis A4 aufweisen. Zu diesem Zweck sind die Schaltungspunkte 37 und 36 an ein erstes Summierglied 44 geführt, dessen Ausgang mit dem Eingang von V61 beschaltet ist. Die Schaltungspunkte 38 und 43 sind über ein Summierglied 45 an den Eingang von V62 gelegt, die Schaltungspunkte 39 und 42 über ein Summierglied 46 an den Eingang von V63 und die Schaltungspunkte 40 und 41 über ein Summierglied 47 an den Eingang von V64. Die Ausgänge der Verstärker sind mit einer Summierungsschaltung 48 verbunden, an deren Ausgang 49 das gefilterte Ausgangssignal Sa zur Verfügung steht.

Dabei wird ein erster Funktionswert von Sa in der Weise gebildet, daß die in V61 bis V64 entstehenden Produkte $A1 \cdot (Y1 + Y8)$, $A2 \cdot (Y2 + Y7)$, $A3 \cdot (Y3 + Y6)$ und $A4 \cdot (Y4 + Y5)$ in der Summierungsschaltung 48 zueinander addiert werden. Der nächste Funktionswert von Sa, der um die Verzögerungszeit einer der Stufen VZi gegenüber dem ersten versetzt ist, wird durch eine Summierung der produkte A1 . (Y2 + Y9), A2 . (Y3 + Y8), A3 . (Y4 + Y7) und A4 . (Y5 + Y6) gebildet usw.. Allgemein werden im Takte der Abtastung von Se jeweils Blöcke von acht Abtastwerten paarweise zueinander addiert, die entstehenden Zwischensummen mit den Filterkoeffizienten A1 ... A4 multipliziert und die entstandenen Produkte zueinander addiert.

Die Funktionswerte der gefilterten Ausgangsfunktion Sa von Fig. 6 werden mit der Datenverarbeitungsanlage nach Fig. 4 erhalten, wenn die dem Rechenwerk 1 blockweise zugeführten Abtastwerte, und zwar Y1, Y8, Y2, Y7, Y3, Y6, Y4 und Y5 im ersten Block, Y2, Y9, Y3, Y8, Y4, Y7, Y5 und Y6 im zweiten Block usw. im Rechenwerk 1 jeweils paarweise zueinander addiert werden, die sich ergebenden Zwischensummen jeweils mit in einem Register gespeicherten Filterkoeffizienten A1 ... A4 multipliziert werden und die so gebildeten Produkte zueinander addiert werden. Die auf diese Weise in 1 errechneten Funktionswerte von Sa werden dann über die Sammelleitung 4 und die entsprechend durchgeschaltete Eingabe/Ausgabe-Einheit 5 auf die Leitung 9 ausgegeben und im Digital/Analog-Wandler 10 in analoge Größen umgeformt, die am Ausgang 11 abgreifbar sind. Die Gesamtheit der an 11 auftretenden analogen Größen bildet dann insbesondere nach einer Filterung in einem nachgeschalteten Tiefpaß ein analoges Ausgangssignal Sa.

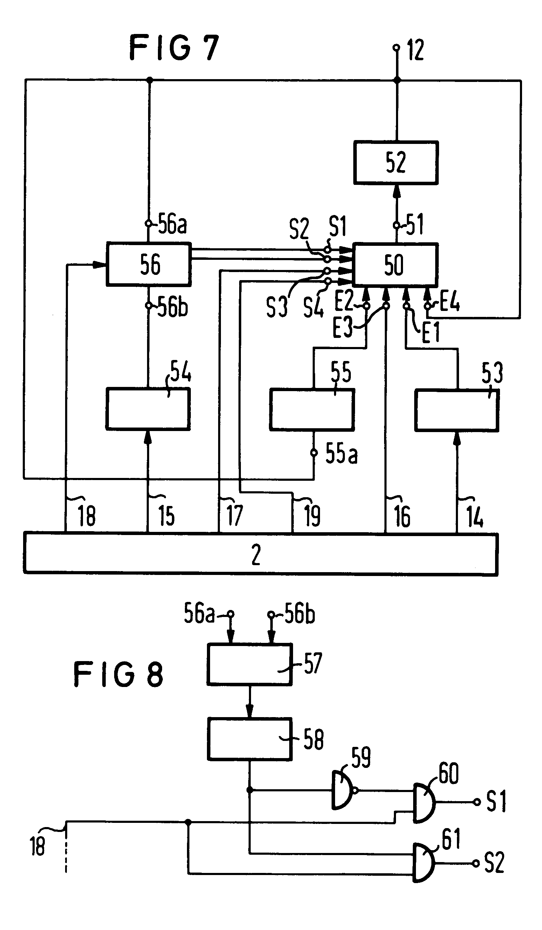

In Fig. 7 ist eine bevorzugte Ausgestaltung der adressarithmetischen Einheit 13 bzw. 13' oder 13'' dargestellt. Ein Bestandteil derselben ist ein Adressen-Multiplexer 50, dessen Ausgang 51 mit dem Eingang eines Adressenregisters 52 beschaltet ist. Der Ausgang von 52 ist mit dem Adresseneingang 12 des Speichers 3 (Fig. 1) verbunden. Weiterhin sind ein Register 53 zur Speicherung einer Adressenbereichsuntergrenze und ein Register 54 zur Speicherung einer Adressenbereichsobergrenze vorgesehen, deren Eingänge jeweils über die Leitungsbündel 14 und 15 mit dem Leitwerk 2 verbunden sind. Mit 55 ist eine Inkrementiereinrichtung bezeichnet, deren Eingang 55a mit dem Ausgang des Adressenregisters 52 beschaltet ist. Die Ausgänge des Registers 53 und der Inkrementiereinrichtung 55 sind an die Eingänge E1 und E2 des Adressen-Multiplexers 50 geschaltet. Die Adresseneingabeleitung 16 verbindet das Leitwerk 2 mit dem Eingang E3 von 50. Außerdem ist der Ausgang des Adressenregisters 52 mit dem Eingang E4 von 50 verbunden. Die Ausgänge des Adressenregisters 52 und des Registers 54 sind an Eingänge 56a und 56b einer Logikschaltung 56 gelegt, die vom Leitwerk 2 über die Leitung 18 angesteuert wird. Zwei Ausgänge der Logikschaltung 56 sind mit zwei Steuereingängen S1 und S2 des Adressen-Multiplexers 50 verbunden, während zwei weitere Steuereingänge S3 und S4 von 50 mit den Leitungen 17 und 19 beschaltet sind. Durch Zuführung eines Steuersignals an den Steuereingang S1 wird der Eingang E1 an den Ausgang 51 des Adressen-Multiplexers 50 durchgeschaltet. Analog hierzu wird jeder der Eingänge E2, E3 oder E4 durch ein Steuersignal an S2, S3 oder S4 auf den Ausgang 51 durchgeschaltet. Die Logikschaltung 56 arbeitet in der Weise, daß bei Gleichheit der Inhalte des Adressenregisters 52 und des Registers 54 in Abhängigkeit von einem Befehlssignal auf der Leitung 18 ein Steuersignal über den einen Ausgang auf S1 übertragen wird. Bei Ungleichheit dieser Registerinhalte wird in Abhängigkeit von einem Befehlssignal auf der Leitung 18 ein Steuersignal über den anderen Ausgang auf S2 übertragen.

Zur zyklischen Adressierung des Speichers 3 über die adressarithmetische Einheit 13 wird dem Register 53 über die Leitung 14 eine Binärzahl eingegeben, die die Adressenbereichsuntergrenze darstellt. Dem Register 54 wird über die Leitung 15 eine andere Binärzahl eingegeben, die die Adressenbereichsobergrenze bedeutet. Gibt man nun über die Adresseneingabeleitung 16 z.B. eine zwischen diesen beiden Binärzahlen liegende, weitere Binärzahl ein und schaltet diese durch ein Befehlssignal auf der Leitung 17 über E3 auf den Ausgang 51 des Adressen-Multiplexers 50 durch, so wird diese Binärzahl auf das Adressenregister 52 übertragen. Damit wird über den Ausgang von 52 eine Adresse abgegeben, die innerhalb des eingestellten Adressenbereichs liegt. Für eine fortlaufende zyklische Adressierung innerhalb des Speicherbereiches genügt es dann, der Logikschaltung 56 über die Leitung 18 eine Reihe von Befehlssignalen zuzuführen. Jedes derselben veranlaßt die Logikschaltung 56 unter der Voraussetzung, daß die jeweils von 52 abgegebene Adresse innerhalb des Adressenbereiches liegt, zur Abgabe eines Steuersignals an den Eingang S2. Da von der jeweils abgegebenen Adresse, die auch am Eingang 55a der Inkrementiereinrichtung 55 liegt, in 55 automatisch die nächsthöhere Adresse abgeleitet und an den Eingang E2 gelegt wird, bedeutet das Eintreffen eines Steuersignals am Eingang S2, daß die nächsthöhere Adresse über 50 und 52 an den Ausgang von 13 durchgeschaltet wird. Wenn von 52 eine Adresse abgegeben wird, die der Bereichsobergrenze entspricht, so ergeben sich die gleichen Registerinhalte in den Registern 52 und 54. Damit wird durch das nächstfolgende Befehlssignal auf der Leitung 18 die Logikschaltung 56 zur Abgabe eines Signals an den Eingang S1 von 50 veranlaßt. Das bedeutet aber, daß die im Register 53 gespeicherte Adresse, die der Adressenbereichsuntergrenze entspricht, über E1, 50 und 52 an den Ausgang der adressarithmetischen Einheit 13 gelangt. Die nächstfolgenden Befehlssignale auf der Leitung 18 veranlassen dann wieder die Abgabe einer Adressenfolge, die den Adressenbereich schrittweise in aufsteigender Richtung durchläuft.

Die Inkrementiereinrichtung 55 besteht zweckmäßigerweise aus einem Binärzähler, der automatisch bei Eingabe einer Binärzahl über den Eingang 55a eine um ein bestimmtes Inkrement, z.B. 1, erhöhte Binärzahl an den Eingang E2 des Adressen-Multiplexers 50 abgibt.

Eine bevorzugte schaltungstechnische Durchbildung der logischen Schaltung 56 ist in Fig. 8 gezeigt. Die (n-poligen) Eingänge 56a und 56b von 56 stellen hierbei gleichzeitig die Eingänge einer Exklusiv-Oder-Schaltung 57 dar, deren (n-poliger) Ausgang an die n Eingänge einer ODER-Schaltung 58 geführt ist. Der Ausgang der letzteren ist einerseits über einen Inverter 59 mit dem ersten Eingang eines UND-Gliedes 60 und andererseits mit dem ersten Eingang eines UND-Gliedes 61 direkt verbunden. Die zweiten Eingänge der UND-Glieder 60, 61 sind mit der Steuerleitung 18 beschaltet. Der Ausgang des UND-Gliedes 60 ist andererseits an den Steuereingang S1 des Adress-Multiplexers 50 geführt, während der Ausgang des UND-Gliedes 61 mit dem Steuereingang S2 von 50 verbunden ist. Am Ausgang der ODER-Schaltung 58 liegt immer dann eine logische "1", wenn die über 56a und 56b zugeführten n-stelligen Binärzahlen voneinander abweichen. Das bedeutet aber eine Sperrung des UND-Gliedes 60, während die auf der Leitung 18 angenommenen Befehlssignale über das UND-Glied 61 auf S2 übertragen werden und eine inkrementelle Weiterschaltung der jeweils ausgegebenen Adresse bewirken. Sind aber die Registerinhalte von 52 und 54 gleich, so werden über 56a und 56b gleiche Binärzahlen zugeführt. Am Ausgang von 58 erscheint dann eine logische "0" und das UND-Glied 60 überträgt das nächstfolgende Befehlssignal auf der Leitung 18 an den Steuereingang S1, während das UND-Glied 61 sperrt.

Ersetzt man in Fig. 7 die Inkrementiereinrichtung 55 durch eine Dekrementiereinrichtung, die beispielsweise aus einem Rückwärtszähler bestehen kann, und verwendet gleichzeitig das Register 54 zur Speicherung der Adressenbereichsuntergrenze und das Register 53 zur Speicherung der Adressenbereichsobergrenze, so ergibt sich eine zyklische Adressierung, bei der der zwischen diesen Grenzen liegende Adressenbereich von den einzelnen Adressenfolgen in jeweils absteigender Richtung durchlaufen wird. Bei den anhand der Figuren 2 und 5 erläuterten Verfahren würden sich dann sowohl in der ersten Phase, also während des Einschreibens der zu speichernden Abtastwerte, als auch in der zweiten Phase, also während des Auslesens der zu verarbeitenden Abtastwerte und des Überschreibens einzelner gespeicherter Abtastwerte durch neue Werte, Richtungsumkehrungen sämtlicher über die Logikschaltung 56 gesteuerter Adressendurchläufe ergeben.

**Patentansprüche**

1. Verfahren zur Bereitstellung von Abtastwerten eines zeitabhängigen Signals in einer Datenverarbeitungsanlage mit einem Rechenwerk (1), einem Leitwerk (2), einem Speicher (3), der mit dem Rechenwerk (1) über eine Sammelleitung (4) verbunden ist und einer ersten adressarithmetischen Einheit (13), die zwischen dem Leitwerk (2) und einem Adresseneingang (12) des Speichers angeordnet ist, bei dem die erste adressarithmetische Einheit (13, 13') in einer ersten Phase eine Adressenfolge ausgibt, deren einzelne Adressen einen Adressenbereich (Z1 ... Z5) mit frei wählbaren Bereichsgrenzen (Z1, Z5) schrittweise durchlaufen, wobei in jeden der hierdurch adressierten Speicherplätze (P1 ... P5) ein Abtastwert (Y1 ... Y5) des zeitabhängigen Signals eingeschrieben wird, bei dem in einer sich anschließenden zweiten Phase eine Adressenfolge ausgegeben wird, durch die der Adressenbereich (Z1 ... Z5) in einer Mehrzahl von Durchläufen jeweils in derselben Richtung zyklisch durchlaufen wird, wobei an einer der Bereichsgrenzen (Z1), die nach dem Beginn des ersten Durchlaufes erreicht wird, der unter dieser Adresse (Z12) gespeicherte Abtastwert als ältester der in der ersten Phase eingeschriebenen Abtastwerte durch Einschreiben eines weiteren Abtastwertes (Y6) ersetzt wird, bei dem in jedem sich anschließenden Durchlauf beim Erreichen jeweils einer einzigen Adresse (Z23), die von Durchlauf zu Durchlauf um einen Schritt weiter gegenüber der zuletzt genannten Bereichsgrenze (Z1) versetzt ist, der unter dieser Adresse gespeicherte Abtastwert (Y2) als jeweils ältester der noch verbliebenen, in der ersten Phase eingeschriebenen Abtastwerte durch Einschreiben eines weiteren Abtastwertes (Y7) ersetzt wird, und bei dem die übrigen, innerhalb sämtlicher Durchläufe der zweiten Phase adressierten Speicherplätze (P1 ... P5) in zyklischer Folge ausgelesen und die ausgelesenen Abtastwerte dem Rechenwerk (1) zugeführt werden, **dadurch gekennzeichnet,** daß neben der ersten (13') eine zweite adressarithmetische Einheit (13'') vorhanden ist, beide adressarithmetischen Einheiten (13' und 13'') ausgangsseitig über eine durch das Leitwerk (2) gesteuerte Multiplexschaltung (31) mit dem Adresseneingang (12) des Speichers (3) verbunden sind und die zweite adressarithmetische Einheit in einer ersten Phase eine Adressenfolge ausgibt, deren einzelne Adressen einen zweiten Adressenbereich (Z1'' ... Z4'') mit frei wählbaren Bereichsgrenzen schrittweise durchlaufen, und daß bei den von der zweiten adressarithmetischen Einheit (13'') in der zweiten Phase ausgegebenen Adressenfolgen beim Erreichen jeder Adresse (Z41'', Z32'', Z23'' ...), unter der ein weiterer Abtastwert (Y9, Y10, Y11) eingeschrieben werden soll, zunächst der unter dieser Adresse vorher gespeicherte Abtastwert (Y5, Y6, Y7) auf die Sammelleitung (4) ausgelesen wird, anschließend dieser vorher gespeicherte Abtastwert (Y5, Y6, Y7) in jeweils einen von der ersten adressarithmetischen Einheit (13') adressierten Speicherplatz P1', P2', P3'), in dem ein Abtastwert ersetzt werden soll, als der diesen Abtastwert ersetzende eingeschrieben wird, sodann der obengenannte weitere Abtastwert (Y9, Y10, Y11) eingeschrieben wird und schließlich dieser eingeschriebene weitere Abtastwert (Y9, Y10, Y11) auf die Sammelleitung (4) ausgelesen wird.

2. Verfahren nach Anspruch 1, **dadurch gekennzeichnet,** daß über die erste adressarithmetische Einheit (13') eine erste Folge von Abtastwerten eines zeitabhängigen Signals (Se) bereitgestellt werden, welches der Filterfunktion eines linearphasigen Transversalfilters mit symmetrischen Filterkoeffizienten zu unterwerfen ist, daß über die zweite adressarithmetische Einheit (13'') eine zweite, sich der ersten anschließende Folge von Abtastwerten dieses Signals (Se) bereitgestellt werden, daß jeweils die ersten Abtastwerte aus beiden Folgen nacheinander, sodann die zweiten Abtastwerte aus beiden Folgen nacheinander usw. dem Rechenwerk (1) zugeführt werden, und daß die so gebildeten Paare von Abtastwerten gleicher Ordnungszahl aus beiden Abtastfolgen jeweils zum Zwecke der Addition der Abtastwerte innerhalb der einzelnen Paare und der Multiplikation der so entstandenen Zwischensummen mit im Rechenwerk gespeicherten symmetrischen Filterkoeffizienten bereitgestellt werden.

3. Schaltungsanordnung zur Durchführung des Verfahrens nach Anspruch 1, bei der in einer Datenverarbeitungsanlage mit einem Rechenwerk (1), einem Speicher (3), der mit dem Rechenwerk (1) über eine Sammelleitung (4) verbunden ist, einem Leitwerk (2) das über Steuerleitungen (20 und 21) mit dem Speicher (3) und dem Rechenwerk (1) verschaltet ist und einer ersten adressarithmetischen Einheit (13), die zwischen dem Leitwerk (2) und einem Adresseneingang (12) des Speicher (3) angeordnet ist, **dadurch gekennzeichnet,** daß neben der ersten (13, 13') eine zweite adressarithmetische Einheit (13'') vorhanden ist und beide adressarithmetischen Einheiten (13' und 13'') ausgangsseitig über eine Multiplexschaltung (31) mit dem Adresseneingang (12) des Speichers (3) verbunden sind, wobei die Multiplexschaltung über Steuerleitungen (32, 33) durch das Leitwerk (2) ansteuerbar ist, und daß sowohl die erste adressarithmetische Einheit (13') über Leitungen (14' ... 19') als auch die zweite adressarithmetische Einheite (13'') über Leitungen (14'' ... 19'') mit dem Leitwerk (2) verbunden ist.

4. Schaltungsanordnung nach Anspruch 3, **dadurch gekennzeichnet,** daß eine adressarithmetische Einheit (13, 13', 13'') ein Adressenregister (52) enthält, das einem Adress-Multiplexer (50) nachgeschaltet ist, daß dieser Eingänge (E1, E2) aufweist, die mit einem zur Speicherung einer Adressbereichsuntergrenze dienenden zweiten Register (53) und einer Inkrementiereinrichtung (55) beschaltet sind, wobei die Eingänge (55a) der Inkrementiereinrichtung (55) mit den Ausgängen des Adressenregisters (52) verbunden sind, daß Steuereingänge (S1, S2) des Adressen-Multiplexers (50) mit einer Logikschaltung (56) verbunden sind, daß die Logikschaltung (56) jeweils mit den Ausgängen des Adressenregisters (52) und eines zur Speicherung einer Adressenbereichsobergrenze dienenden dritten Registers (54) verbunden ist, daß die Logikschaltung (56) bei Gleichheit der Inhalte des Adressenregisters (52) und dritten Registers (54) das zweite Register (53), bei Ungleichheit der genannten Inhalte die Inkrementiereinrichtung (55) an den Ausgang des Adressen-Multiplexers (50) durchschaltet, und daß Leitungen (14, 15, 18) das zweite Register (53), das dritte Register (54) und die Logikschaltung (56) mit dem Leitwerk (2) verbinden.

5. Schaltungsanordnung nach Anspruch 3, **dadurch gekennzeichnet,** daß eine adressarithmetische Einheit (13, 13', 13'') ein Adressenregister (52) enthält, das einem Adressen-Multiplexer (50) nachgeschaltet ist, daß dieser Eingänge (E1, E2) aufweist, die mit einem zur Speicherung einer Adressenbereichsobergrenze dienenden vierten Register und einer Dekrementiereinrichtung beschaltet sind, wobei die Eingänge (55a) der Dekrementiereinrichtung (55) mit den Ausgängen des Adressenregisters (52) verbunden sind, daß Steuereingänge (S1, S2) des Adressen-Multiplexers (50) mit einer Logikschaltung (56) verbunden sind, daß die Logikschaltung (56) jeweils mit den Ausgängen des Adressenregisters (52) und eines zur Speicherung einer Adressenbereichsuntergrenze dienenden fünften Registers verbunden ist, daß die Logikschaltung (56) bei Gleichheit der Inhalte des Adressenregisters (52) und des fünften Registers das vierte Register, bei Ungleichheit der genannten Inhalte die Dekrementiereinrichtung an den Ausgang des Adressen-Multiplexers (50) durchschaltet, und daß Leitungen (14, 15, 18) das vierte Register, das fünfte Register und die Logikschaltung (56) mit dem Leitwerk (2) verbinden.

6. Schaltungsanordnung nach einem der Ansprüche 4 oder 5, **dadurch gekennzeichnet,** daß die Ausgänge des dritten (54) oder fünften Registers und des Adressenregisters (52) mit einer in der Logikschaltung (56) enthaltenen Exklusiv-ODER-Schaltung (57) verbunden sind, deren Ausgang an den Eingängen einer ODER-Schaltung (58) liegt, daß der Ausgang der ODER-Schaltung (58) einerseits über einen Inverter (59) mit dem ersten Eingang eines ersten UND-Gliedes (60) und andererseits mit dem ersten Eingang eines zweiten UND-Gliedes (61) verbunden ist, daß die zweiten Eingänge beider UND-Glieder (60, 61) über eine Leitung (18) mit dem Leitwerk (2) verbunden sind, und daß je ein Ausgang der UND-Glieder (60, 61) an je einen der Steuereingänge (S1, S2) des Adressen-Multiplexers (50) geführt ist.

7. Schaltungsanordnung nach einem der Ansprüche 4 bis 6, **dadurch gekennzeichnet,** daß der Adressenregisterausgang (12) an einen Eingang (E4) des Adressen-Multiplexers (50) geführt ist und daß der Adressen-Multiplexer (50) mit einem Steuereingang (S4) versehen ist, der über eine Leitung (19) vom Leitwerk (2) so ansteuerbar ist, daß der Adressenregisterausgang (12) auf den Ausgang (51) des Adressen-Multiplexers (50) durchschaltbar ist.

8. Schaltungsanordnung nach einem der Ansprüche 4 bis 7, **dadurch gekennzeichnet,** daß eine Adresseneingabeleitung (16) vorgesehen ist, die vom Leitwerk (2) an einen Eingang (E3) des Adressen-Multiplexers (50) geführt ist, und daß der Adressen-Multiplexer (50) mit einem zusätzlichen Steuereingang (S3) versehen ist, der über eine Leitung (17) vom Leitwerk (2) so ansteuerbar ist, daß die Adresseneingabeleitung (16) auf den Ausgang (51) des Adressen-Multiplexers (50) durchschaltbar ist.

## Claims

1. Method for the provision of sampled values of a time-dependent signal in a data processing system having an arithmetic unit (1), a control unit (2), a memory (3) which is connected to the arithmetic unit (1) via a bus line (4), and a first address modification unit (13) which is arranged between the control unit (2) and an address input (12) of the memory, in which the first address modification unit (13, 13') outputs in a first phase an address sequence, the individual addresses of which run through step by step an address range (Z1 ... Z5) with freely selectable range limits (Z1, Z5), a sampled value (Y1 ... Y5) of the time-dependent signal being written into each of the memory locations (P1 ... P5) addressed thereby, in which, in a subsequent second phase, an address sequence is output, with which the address range (Z1 ... Z5) is run through cyclically in a plurality of passes in the same direction in each case, at one of the range limits (Z1), which is reached after the beginning of the first pass, the sampled value that is stored at this address (Z12), as the oldest of the sampled values written in the first phase, being replaced by writing in a further sampled value (Y6), in which, upon reaching in each case a single address (Z23) which is offset by one step further with respect to the aforesaid range limit (Z1) from pass to pass, in each subsequent pass the sampled value (Y2) stored at this address, as the oldest of the sampled values written in the first phase still remaining in each case, is replaced by writing in a further sampled value (Y7), and in which the remaining memory locations (P1 ... P5) addressed within all passes of the second phase are read out in cyclical sequence and the sampled values read out are supplied to the arithmetic unit (1), characterised in that a second address modification unit (13'') is present in addition to the first one (13'), both address modification units (13' and 13'') are connected on the output side via a multiplexer circuit (31) controlled by the control unit (2) to the address input (12) of the memory (3), and the second address modification unit outputs in a first phase an address sequence, the individual addresses of which run through step by step a second address range (Z1'' ... Z4'') with freely selectable range limits, and in that, in the case of the address sequences output by the second address modification unit (13'') in the second phase, upon reaching each address (Z41'', Z32'', Z23'' ...) at which a further sampled value (Y9, Y10, Y11) is to be written, first of all the sampled value (Y5, Y6, Y7) previously stored at this address is read out onto the bus line (4), then this previously stored sampled value (Y5, Y6, Y7) is written into in each case a memory location (P1', P2', P3') which is addressed by the first address modification unit (13') and in which a sampled value is to be replaced, as the value replacing said sampled value, then the abovementioned further sampled value (Y9, Y10, Y11) is written in, and finally this further sampled value (Y9, Y10, Y11) written is read out onto the bus line (4).

2. Method according to Claim 1, characterised in that a first sequence of sampled values of a time-dependent signal (Se) is provided via the first address modification unit (13'), which sequence is to be subjected to the filter function of a linear-phase transversal filter having symmetrical filter coefficients, in that a second sequence of sampled values of said signal (Se) following the first sequence is provided via the second address modification unit (13''), in that in each case the first sampled values from both sequences are successively supplied to the arithmetic unit (1), then the second sampled values from both sequences, etc., and in that the pairs of sampled values having the same order number thus formed from both sample sequences are provided in each case for the purpose of adding the sampled values within the individual pairs and multiplying the subtotals thus obtained by symmetrical filter coefficients stored in the arithmetic unit.

3. Circuit arrangement for carrying out the method according to Claim 1, in which in a data processing system having an arithmetic unit (1), a memory (3) which is connected to the arithmetic unit (1) via a bus line (4), a control unit (2) which is connected to the memory (3) and to the arithmetic unit (1) via control lines (20 and 21), and a first address modification unit (13) which is arranged between the control unit (2) and an address input (12) of the memory (3), characterised in that a second address modification unit (13'') is present in addition to the first one (13, 13') and both address modification units (13' and 13'') are connected on the output side to the address input (12) of the memory (3) via a multiplexer circuit (31), it being possible for the multiplexer circuit to be activated by the control unit (2) via control lines (32, 33), and in that both the first address modification unit (13') via lines (14' ... 19') and the second address modification units (13'') via lines (14'' ... 19'') are connected to the control unit (2).

4. Circuit arrangement according to Claim 3, characterised in that an address modification unit (13, 13', 13'') contains an address register (52) which is connected downstream of an address multiplexer (50), in that said address modification unit has inputs (E1, E2) which are connected to a second register (53), serving to store a lower address range limit, and an incrementing device (55), the inputs (55a) of the incrementing device (55) being connected to the outputs of the address register (52), in that control inputs (S1, S2) of the address multiplexer (50) are connected to a logic circuit (56), in that the logic circuit (56) is connected in each case to the outputs of the address register (52) and a third register (54) serving to store an upper address range limit, in that, if the contents of the address register (52) and third register (54) are identical, the logic circuit (56) switches through the second register (53), and if said contents are not identical it switches through the incrementing device (55) to the output of the address multiplexer (50), and in that lines (14, 15, 18) connect the second register (53), the third register (54) and the logic circuit (56) to the control unit (2).

5. Circuit arrangement according to Claim 3, characterised in that an address modification unit (13, 13', 13'') contains an address register (52) which is connected downstream of an address multiplexer (50), in that said address modification unit has inputs (E1, E2) which are connected to a fourth register, serving to store an upper address range limit, and a decrementing device, the inputs (55a) of the decrementing device (55) being connected to the outputs of the address register (52), in that control inputs (S1, S2) of the address multiplexer (50) are connected to a logic circuit (56), in that the logic circuit (56) is connected in each case to the outputs of the address register (52) and a fifth register serving to store a lower address range limit, in that, if the contents of the address register (52) and of the fifth register are identical, the logic circuit (56) switches through the fourth register, and if said contents are not identical it switches through the decrementing device to the output of the address multiplexer (50), and in that lines (14, 15, 18) connect the fourth register, the fifth register and the logic circuit (56) to the control unit (2).

6. Circuit arrangement according to one of Claims 4 or 5, characterised in that the outputs of the third (54) or fifth register and of the address register (52) are connected to an exclusive-OR circuit (57) which is contained in the logic circuit (56) and the output of which is applied to the inputs of an OR circuit (58), in that the output of the OR circuit (58) is connected on the one hand via an inverter (59) to the first input of a first AND element (60) and on the other hand to the first input of a second AND element (61), in that the second inputs of both AND elements (60, 61) are connected via a line (18) to the control unit (2), and in that in each case one output of the AND elements (60, 61) is conducted to in each case one of the control inputs (S1, S2) of the address multiplexer (50).

7. Circuit arrangement according to one of Claims 4 to 6, characterised in that the address register output (12) is conducted to an input (E4) of the address multiplexer (50), and in that the address multiplexer (50) is provided with a control input (S4) which can be activated by the control unit (2) via a line (19) in such a way that the address register output (12) can be switched through to the output (51) of the address multiplexer (50).

8. Circuit arrangement according to one of Claims 4 to 7, characterised in that an address input line (16) is provided, which is conducted from the control unit (2) to an input (E3) of the address multiplexer (50), and in that the address multiplexer (50) is provided with an additional control input (S3) which can be activated by the control unit (2) via a line (17) in such a way that the address input line (16) can be switched through to the output (51) of the address multiplexer (50).

**Revendications**

1. Procédé pour préparer des valeurs d'échantillonnage d'un signal, en fonction du temps, dans une installation de traitement de données comportant une unité de calcul (1), une unité de commande (2), une mémoire (3), qui est raccordée à l'unité de calcul (1) par l'intermédiaire d'une ligne collective (4), et une première unité arithmétique (13) de délivrance d'adresses, qui est disposée entre l'unité de commande (2) et une entrée d'adresses (12) de la mémoire, et selon lequel la première unité arithmétique (13,13') de délivrance d'adresses délivre, dans une première phase, une suite d'adresses, dont les adresses individuelles parcourent pas-à-pas une zone d'adresses (Z1...Z5) possédant des limites (Z1,Z5) pouvant être librement choisies, et selon lequel une valeur d'échantillonnage (Y1...Y5) du signal, qui est fonction du temps, est enregistrée en chacun des emplacements (P1...P5) de la mémoire, adressés de ce fait, et selon lequel lors d'une seconde phase ultérieure est délivrée une suite d'adresses, grâce à laquelle la zone d'adresses (Z1...Z5) est parcourue cycliquement selon une multiplicité de passages, respectivement dans le même sens, et selon lequel au niveau de l'une des limites de zones (Z1), qui est atteinte après le début du premier passage, la valeur d'échantillonnage mémorisée au-dessous de cette adresse (Z12) est remplacée, en tant que plus ancienne des valeurs d'échantillonnage enregistrées pendant la première phase, par enregistrement d'une autre valeur d'échantillonnage (Y6), et selon lequel lors de chaque passage ultérieur, lorsque respectivement une adresse unique (Z23), qui est décalée d'un pas de plus, d'un passage au suivant, par rapport à la limite de zone (Z1) indiquée en dernier lieu, est respectivement atteinte, la valeur d'échantillonnage (Y2) mémorisée à cette adresse est remplacée, en tant que respectivement plus ancienne des valeurs d'échantillonnage enregistrées dans la première phase, qui subsistent encore, par enregistrement d'une autre valeur d'échantillonnage (Y7), et selon lequel les autres emplacements de mémoire (P1...P5), adressés pendant la totalité des passages lors de la seconde phase, sont lus selon une suite cyclique et les valeurs d'échantillonnage lues sont envoyées à l'unité de calcul (1), caractérisé par le fait qu'en plus de la première unité arithmétique (13') de délivrance d'adresses, il est prévu une seconde unité arithmétique (13'') de délivrance d'adresses, que ces deux unités arithmétiques (13' et 13'') de délivrance d'adresses sont raccordées, côté sortie, par l'intermédiaire d'un circuit multiplex (31) commandé par l'unité de commande (2), à l'entrée d'adresses (12) de la mémoire (3), et que la seconde unité arithmétique de délivrance d'adresses délivre, pendant une première phase, une suite d'adresses, dont les différentes adresses traversent pas-à-pas une seconde zone d'adresses (Z1''...Z4'') possédant des limites pouvant être choisies librement, et que, dans les suites d'adresses délivrées par la seconde unité arithmétique (13'') de délivrance d'adresses pendant la seconde phase, lorsque chaque adresse (Z41'',Z32'',Z23''...), à laquelle une autre valeur d'échantillonnage (Y9,Y10,Y11) doit être enregistrée, est atteinte, tout d'abord la valeur d'échantillonnage (Y5,Y6,Y7), mémorisée auparavant à cette adresse est lue dans la ligne collective (4), puis cette valeur d'échantillonnage (Y5,Y6,Y7) préalablement mémorisée est enregistrée respectivement en un emplacement de mémoire (P1',P2',P3'), qui est adressé par la première unité arithmétique (13') de délivrance d'adresses et dans laquelle une valeur d'échantillonnage doit être remplacée, en tant que valeur d'échantillonnage remplaçant cette valeur d'échantillonnage, puis que l'autre valeur d'échantillonnage (Y9,Y10, Y11) mentionnée précédemment est enregistrée et qu'enfin cette autre valeur d'échantillonnage enregistrée (Y9,Y10,Y11) est lue dans la ligne collective (4).

2. Procédé suivant la revendication 1, caractérisé par le fait que par l'intermédiaire de la première unité arithmétique (13') de délivrance d'adresses est préparée une première suite de valeurs d'échantillonnage d'un signal (Se), qui est fonction du temps et qui est soumis à la fonction de filtrage d'un filtre transversal à phase linéaire possédant des coefficients de filtre symétriques, par l'intermédiaire de la seconde unité arithmétique (13'') de délivrance d'adresses est préparée une seconde suite, qui se raccorde à la première, de valeurs d'échantillonnage de ce signal (Se), que respectivement les premières valeurs d'échantillonnage tirées des deux suites sont envoyées successivement, puis les secondes valeurs d'échantillonnage tirées des deux suites sont envoyées successivement, etc., à l'unité de calcul (1) et que les couples ainsi formés de valeurs d'échantillonnage de même rang tirés des deux suites d'échantillonnage sont préparés respectivement pour réaliser l'addition des valeurs d'échantillonnage à l'intérieur des couples individuels et pour la multiplication des sommes intermédiaires ainsi obtenues par des coefficients de filtre symétriques mémorisés dans l'unité de calcul.

3. Montage pour la mise en oeuvre du procédé suivant la revendication 1, dans une installation de traitement de données comportant une unité de calcul (1), une mémoire (3), qui est raccordée à l'unité de calcul (1) par l'intermédiaire d'une ligne collective (4), l'unité de commande (2), qui est raccordée au moyen de lignes de commande (20 et 21) à la mémoire (3) et à l'unité de calcul (1), et une première unité arithmétique (13) de délivrance d'adresses, qui est disposée entre l'unité de commande (2) et une entrée d'adresses (12) de la mémoire (3), caractérisé par le fait qu'en plus de la première unité arithmétique (13,13') de délivrance d'adresses, il est prévu une seconde unité arithmétique (13'') de délivrance d'adresses, et les deux unités arithmétiques (13' et 13'') sont raccordées, côté sortie, par l'intermédiaire d'un circuit multiplex (31), à l'entrée d'adresses (12) de la mémoire (3), le circuit multiplex pouvant être commandé par l'unité de commande (2) par l'intermédiaire de lignes de commande (32,33), et que la première unité arithmétique (13'), de délivrance d'adresses est raccordée par l'intermédiaire de lignes (14'...19') et la seconde unité arithmétique (13'') de délivrance d'adresses, par l'intermédiaire de lignes (14''...19'') à l'unité de commande (2).

4. Montage suivant la revendication 3, caractérisé en ce qu'une unité arithmétique (13',13'') de délivrance d'adresses comporte un registre d'adresses (52) qui est branché en aval d'un multiplexeur d'adresses (50), que ce dernier possède des entrées (E1,E2), qui sont raccordées à un second registre (53) utilisé pour mémoriser une limite inférieure de la zone d'adresses, et à un dispositif d'incrémentation (55), dont les entrées (55a) sont raccordées aux sorties du registre d'adresses (52), que les entrées de commande (S1,S2) du multiplexeur d'adresses (50) sont raccordées à un circuit logique (56), que le circuit logique (56) est raccordé respectivement aux sorties du registre d'adresses (52) et à un troisième registre (54) utilisé pour mémoriser une limite supérieure de la zone d'adresses, qu'en cas d'égalité des contenus du registre d'adresses (52) et d'un troisième registre (54), le circuit logique (56) raccorde directement le second registre (53) à la sortie du multiplexeur d'adresses (5), tandis qu'en cas d'inégalité desdits contenus, il raccorde le dispositif d'incrémentation (55) à la sortie du multiplexeur d'adresses (50), et que des lignes (14,15,18) raccordent le second registre (53), le troisième registre (54) et le circuit logique (56) à l'unité de commande (2).

5. Montage suivant la revendication 3, caractérisé par le fait qu'une unité arithmétique (13,13',13'') de délivrance d'adresses comporte un registre d'adresses (52), qui est branchée en aval d'un multiplexeur d'adresses (50), que ce dernier comporte des entrées (E1,E2), qui sont raccordées à un quatrième registre utilisé pour la mémorisation d'une limite supérieure de la zone d'adresses et à un dispositif de décrémentation, les entrées (55a) du dispositif de décrémentation (55) étant raccordées aux sorties du registre d'adresses (52), que des entrées de commande (S1,S2) du multiplexeur d'adresses (50) sont raccordées à un circuit logique (56), que le circuit logique (56) est raccordé respectivement aux sorties du registre d'adresses (52) et d'un cinquième registre utilisé pour mémoriser une limite inférieure de la zone d'adresses, qu'en cas d'égalité des contenus du registre d'adresses (52) et du cinquième registre, le circuit logique (56) raccorde le quatrième registre à la sortie du multiplexeur d'adresses (50) et qu'en cas d'inégalité desdits contenus, il raccorde le dispositif de décrémentation à la sortie du multiplexeur d'adresses (50), et que des lignes (14,15,18) raccordent le quatrième registre, le cinquième registre et le circuit logique (56) à l'unité de commande (2).

6. Montage suivant l'une des revendications 4 ou 5, caractérisé par le fait que les sorties du troisième registre (54) ou du cinquième registre et du registre d'adresses (52) sont raccordées à un circuit OU-Exclusif (57) qui est contenu dans le circuit logique (56) et dont la sortie est raccordée aux entrées d'un circuit OU (58), que la sortie du circuit OU (58) est raccordée d'une part par l'intermédiaire d'un inverseur (59) à la première entrée d'un premier circuit ET (60) et d'autre part à la première entrée d'un second circuit ET (61), que les secondes entrées des deux circuits ET (60,61) sont raccordées par l'intermédiaire d'une ligne (18) à l'unité de commande (2), et qu'une sortie respective des circuits ET (60,61) est raccordée respectivement à l'une des entrées de commande (S1,S2) du multiplexeur d'adresses (50).

7. Montage suivant l'une des revendications 4 à 6, caractérisé par le fait que la sortie (12) du registre d'adresses est raccordée à une entrée (E4) du multiplexeur d'adresses (50) et que le multiplexeur d'adresses (50) est pourvue d'une entrée de commande (54), qui peut être commandée par l'unité de commande (2) par l'intermédiaire d'une ligne (19) de manière que la sortie (12) du registre d'adresses soit interconnectée directement à la sortie (51) du multiplexeur d'adresses (50).

8. Montage suivant l'une des revendications 4 à 7, caractérisé par le fait qu'il est prévu une ligne (16) d'introduction d'adresses, qui est raccordée par l'unité de commande (2) à une entrée (E3) du multiplexeur d'adresses (50), et que le multiplexeur d'adresses (50) est pourvu d'une entrée supplémentaire de commande (S3), qui peut être commandée par l'unité de commande (2) par l'intermédiaire d'une ligne (17) de manière que la ligne (16) d'entrée d'adresses puisse être interconnectée à la sortie (51) du multiplexeur d'adresses (50).

# FIG 1

# FIG 2

# FIG 3

# FIG 4

FIG 5

# FIG 6

# FIG 7

# FIG 8